# EUROPÄISCHE PATENTSCHRIFT

(11) **EP 1 454 280 B1**
(45) Veröffentlichungstag und Bekanntmachung des Hinweises auf die Patenterteilung: **22.02.2006**
(21) Anmeldenummer: 02794957.7
(22) Anmeldetag: 28.11.2002
(51) Int. Cl.: G05B 19/418

(54) **SYSTEM UND VERFAHREN ZUM TESTEN UND/ODER DEBUGGEN VON LAUFZEITSYSTEMEN ZUR LÖSUNG VON MESS-AUFGABEN**
SYSTEM AND METHOD FOR TESTING AND/OR DEBUGGING RUNTIME SYSTEMS FOR SOLVING MES (MANUFACTURING EXECUTION SYSTEM) PROBLEMS
SYSTEME ET PROCEDE DE TEST ET/OU DE DEBOGAGE DE SYSTEMES D'EXECUTION DESTINES A RESOUDRE DES PROBLEMES MES

(30) Priorität: 12.12.2001 DE 10161065
(43) Veröffentlichungstag der Anmeldung: 08.09.2004
(73) Patentinhaber: SIEMENS AKTIENGESELLSCHAFT, 80333 München (DE)
(72) Erfinder: THURNER, Elmar, 90491 Nürnberg (DE); PFANDER, Gotthard, 91056 Erlangen (DE)
(86) Internationale Anmeldenummer: PCT/DE2002/004377
(87) Internationale Veröffentlichungsnummer: WO 2003/050727

(56) Entgegenhaltungen:
- EP-A- 0 910 000
- EP-A- 1 134 636
- US-A- 5 631 825
- US-A- 5 862 381
- ZWINGE P: "OBJEKTORIENTIERTES PROGRAMMIEREN UND VISUALISIEREN VON AUTOMATISIERUNGSSYSTEMEN" , AUTOMATISIERUNGSTECHNISCHE PRAXIS - ATP, OLDENBOURG VERLAG. MUNCHEN, DE, VOL. 33, NR. 9, PAGE(S) 485-490 XP000264961 ISSN: 0178-2320 Absätze [0003],[0004]; Abbildungen 5-9
- OSAWA N ET AL: "A visual performance debugging system for parallel programs" , SYSTEM SCIENCES, 1996., PROCEEDINGS OF THE TWENTY-NINTH HAWAII INTERNATIONAL CONFERENCE ON, WAILEA, HI, USA 3-6 JAN. 1996, LOS ALAMITOS, CA, USA,IEEE COMPUT. SOC, US, PAGE(S) 300-309 XP010156655 ISBN: 0-8186-7426-1 Absatz [0003]; Abbildungen 3-5
- SHIMOMURA T ET AL: "VIPS: a visual debugger for list structures" , COMPUTER SOFTWARE AND APPLICATIONS CONFERENCE, 1990. COMPSAC 90. PROCEEDINGS., FOURTEENTH ANNUAL INTERNATIONAL CHICAGO, IL, USA 31 OCT.-2 NOV. 1990, LOS ALAMITOS, CA, USA,IEEE COMPUT. SOC, US, PAGE(S) 530-537 XP010019766 ISBN: 0-8186-2054-4 Absatz [0002]; Abbildungen 1-4

## Beschreibung

Die Erfindung betrifft ein System zum Testen und/oder Debuggen von Laufzeitsystemen, insbesondere von Laufzeitsystemen zur Lösung von MES-Aufgaben, wobei ein Anwender mit einem Editor grafische Elemente zu einem auf einer Anzeigevorrichtung visualisierbaren Activity-Diagramm verknüpft, wobei zwischen den Activity-Diagrammen durch geeignete Mittel Kommunikationsbeziehungen herstellbar sind und wobei durch ein Activity-Diagramm der Ablauf einer asynchron kooperierenden State Machine beschrieben wird.

Des Weiteren betrifft die Erfindung ein diesbezügliches Verfahren ein Computerprogramm, einen Datenträger und eine Datenverarbeitungseinrichtung.

Aus "Software für die Automatisierung - Transparenz über die Abläufe schaffen", Artikel von Dirk Kozian in Elektronik für die Automatisierung 11, 17.11.1999 ist bekannt, für die Automatisierung von Produktions- bzw. Fertigungsabläufen so genannte Manufacturing Execution Systems (MES) einzusetzen. Diese Systeme integrieren die Automatisierungsebene (Controls) mit den ERP-Systemen (ERP: Enterprise Resource Planning) der Unternehmensleitebene. Manufacturing Execution Systems sind Systeme, die z.B. Informationen zur Optimierung von Produktionsabläufen bereitstellen. Zum einen müssen die Manufacturing Execution Systems die groben Planungsdaten der ERP-Systeme um anlagenspezifische und aktuelle Feinplanungsdaten ergänzen und diese entsprechend an die unterlagerte Automatisierungsebene weiterleiten, zum anderen haben sie die Aufgabe, aus der Automatisierungsebene produktionsrelevante Informationen zu übernehmen, diese aufzubereiten und an die Unternehmensleitebene weiterzumelden. MES-Systeme erfüllen somit die Aufgabe einer vertikalen Integration zwischen der Unternehmensleitebene und der Automatisierungsebene. Typische Einzelaufgaben von MES-Systemen sind Enterprise Asset Management, Maintenance Management, Information Management, Scheduling, Dispatching und Trace & Track. Diese Aufgaben werden jeweils von MES-Komponenten bzw. MES-Applikationen ausgeführt.

Aus "Communicating and Mobile Systems: the π-Calculus", Robin Milner, Cambridge University Press, 1999 ist es bekannt für die Modellierung von Kommunikationssystemen asynchron kooperierende State Machines einzusetzen.

In "Rechnerunterstützte Methoden und Werkzeuge in der industriellen Automatisierung", B. Howein und Dr. B. Gaißmaier, in it 3/91 wird vorgeschlagen, für den Entwurf von Softwaresystemen für die industrielle Automatisierung die formale Entwurfstechnik SDL (Specification and Description Language) einzusetzen und auf der Entwurfsebene zu testen. Das dabei beschriebene Vorgehen bezieht sich aber auf Softwarelösungen für die Automatisierungs-Ebene (Controls) und ist noch nicht optimal.

Der Erfindung liegt daher die Aufgabe zugrunde, ein System und ein Verfahren zum Testen und/oder Debuggen von Laufzeitsystemen, insbesondere von Laufzeitsystemen für MES- oder ERP-Lösungen (Enterprise Ressource Planning) zu schaffen, das für die Arbeitweise dieser Lösungen adäquat ist.

Gemäß der Erfindung wird die oben genannte Aufgabe für ein Verfahren durch die Merkmale des Anspruchs 1 gelöst. Insbesondere im MES-Umfeld arbeiten die Anwendungen bzw. Teilkomponenten meistens autark und (für sich) synchron nebeneinander, kommunizieren aber asynchron miteinander. Die Erfinder sind deswegen von der Erkenntnis ausgegangen, dass sich MES-Anwendungen und Lösungen für MES-Systeme sehr elegant durch asynchron kooperierende State Machines darstellen bzw. realisieren lassen. Das Testen und Debuggen solcher MES-Systeme (aber auch ERP-Systeme) sollte nach Ansicht der Erfinder direkt auf diesen asynchron kooperierende State Machines erfolgen, da dadurch das reale Verhalten des implementierten Systems sehr wirklichkeitsnah überprüft werden kann.
MES-Systeme bzw. ERP-Systeme enthalten in der Regel ein so genanntes Laufzeitsystem zur zeitlichen Ablaufsteuerung der beteiligten Komponenten (Teilkomponenten, Module, Tasks, Prozesse des Betriebssystems etc.), sowie ein so genanntes Engineeringsystem zum Erstellen und Editieren von Programmen, welche zur Ausführung im Laufzeitsystem vorgesehen sind.

Ein Anwender hat dadurch die Möglichkeit das Verhalten bzw. das Fehlverhalten eines Programmablaufs auf grafischer Ebene zu untersuchen.

In der vorliegenden Erfindung kann ein Anwender das Debugging im Single-Step-Modus (Einzelschritt) oder im Komplettdurchlauf (Schnelldurchlauf der Einzelschritte) durchführen. Ein Einzelschritt kann mit Methoden und dazu gehörigen Parameterbelegungen durch Variablenwerte, Bedingungen oder Referenzen auf andere Objekte belegt werden. Dies kann durch Eingabemasken erfolgen. In beiden Modi kann der Anwender das "Durchhangeln" durch das Programm am Bildschirm visuell verfolgen. Das aktuelle grafische Element kann z.B. durch einen Cursor oder Farbumschlag angezeigt werden. Auch andere Möglichkeiten einer Visualisierung sind denkbar.

Eine erste vorteilhafte Ausgestaltung der Erfindung für ein Verfahren liegt darin, dass die Teilprozesse aus Einzelschritten bestehen, die auf ausführbaren Code verweisen. Die Methoden dieser Einzelschritte können auf verschiedene Arten von ausführbarem Code zeigen, etwa Visual Basic Skripts, COM-Funktionsaufrufe, ausführbare Programme. Dadurch wird beim Testen oder Debuggen ein expliziter Kompilierschritt gespart.

Eine weitere vorteilhafte Ausgestaltung der Erfindung für ein Verfahren liegt darin, dass die Steuerung des Laufzeitsystems in Elementen des Activity-Diagramms erfolgt. Im Einzelnen hat das Laufzeitsystem u.a. die Methoden Start, Stop, Abort, Single-Step, Skip-Step, Rewind-Step für diese Steuerung. Damit ein Laufzeitsystem (State-Machine) ein anderes Laufzeitsystem oder sich selbst beeinflussen.

Eine weitere vorteilhafte Ausgestaltung der Erfindung für ein Verfahren liegt darin, dass die Variablenvorbelegungen für die Einzelschritte statisch oder dynamisch erfolgt. Ein Einzelschritt kann mit Methoden und dazu gehörigen Parameterbelegungen durch Variablenwerte, Bedingungen oder Referenzen auf andere Objekte belegt werden. Die Variablenvorbelegungen erfolgen über Eingabemasken mit Parameterzuordnung von In-, Out- oder In/Out-Parametern bzw. Konstanten oder Literalen.

Eine weitere vorteilhafte Ausgestaltung der Erfindung für ein Verfahren liegt darin, dass komplette oder teilweise Lösungen mit ihren Verschaltungen geladen und aufgerufen werden. Dadurch wird das automatische Testen von Programmen (z.B. automatische Regressionstests) sehr leicht ermöglicht.

Eine weitere vorteilhafte Ausgestaltung der Erfindung für ein Verfahren liegt darin, dass während des Ablaufs der asynchron kooperierenden State Machines das jeweils aktuelle grafische Element im Activity-Diagramm optisch auf einer Anzeigevorrichtung gekennzeichnet wird. Ein Anwender kann somit im Activity-Diagramm den Programmablauf verfolgen und dabei ein positives, aber auch ein negatives Verhalten des Programmes visualisiert erkennen.

Eine weitere vorteilhafte Ausgestaltung der Erfindung für ein Verfahren liegt darin, dass die Fehlerzustände visuell hervorgehoben werden. Dadurch wird der Anwender auf Fehler direkt aufmerksam gemacht.

Gemäß der Erfindung wird die oben genannte Aufgabe für ein System durch die Merkmale des Anspruchs 8 gelöst. MES-Systeme bzw. ERP-Systeme enthalten in der Regel ein so genanntes Laufzeitsystem zur zeitlichen Ablaufsteuerung der beteiligten Komponenten (Teilkomponenten, Module, Tasks, Prozesse des Betriebssystems etc.), sowie ein so genanntes Engineeringsystem zum Erstellen und Editieren von Programmen, welche zur Ausführung im Laufzeitsystem vorgesehen sind.

Ein Anwender hat dadurch die Möglichkeit das Verhalten bzw. das Fehlverhalten eines Programmablaufs auf grafischer Ebene zu untersuchen.

In der vorliegenden Erfindung kann ein Anwender das Debugging im Single-Step-Modus (Einzelschritt) oder im Komplettdurchlauf (Schnelldurchlauf der Einzelschritte) durchführen. Ein Einzelschritt kann mit Methoden und dazu gehörigen Parameterbelegungen durch Variablenwerte, Bedingungen oder Referenzen auf andere Objekte belegt werden. Dies kann durch Eingabemasken erfolgen. In beiden Modi kann der Anwender das "Durchhangeln" durch das Programm am Bildschirm visuell verfolgen. Das aktuelle grafische Element kann z.B. durch einen Cursor oder Farbumschlag angezeigt werden. Auch andere Möglichkeiten einer Visualisierung sind denkbar.

Typische Eingabehilfsmittel sind Mouse, Tastatur, Lichtgriffel etc. Typische Anzeigemittel sind Bildschirm (Monitor, Display), wobei ein Bildschirm mehrere Bildschirmbereiche aufweisen kann. Ein Drag&Drop-Mechanismus ist dabei vorteilhaft.

Eine erste vorteilhafte Ausgestaltung der Erfindung für ein System liegt darin, dass die Teilprozesse aus Einzelschritten bestehen, die auf ausführbaren Code verweisen. Die Methoden dieser Einzelschritte können auf verschiedene Arten von ausführbarem Code zeigen, etwa Visual Basic Skripts, COM-Funktionsaufrufe, ausführbare Programme. Dadurch wird beim Testen oder Debuggen ein expliziter Kompilierschritt gespart.

Eine weitere vorteilhafte Ausgestaltung der Erfindung für ein System liegt darin, dass die Steuerung des Laufzeitsystems in Elementen des Activity-Diagramms erfolgt. Im Einzelnen hat das Laufzeitsystem u.a. die Methoden Start, Stop, Abort, Single-Step, Skip-Step, Rewind-Step für diese Steuerung. Damit ein Laufzeitsystem (State-Machine) ein anderes Laufzeitsystem oder sich selbst beeinflussen.

Eine weitere vorteilhafte Ausgestaltung der Erfindung für ein System liegt darin, dass die Variablenvorbelegungen für die Einzelschritte statisch oder dynamisch erfolgt. Ein Einzelschritt kann mit Methoden und dazu gehörigen Parameterbelegungen durch Variablenwerte, Bedingungen oder Referenzen auf andere Objekte belegt werden. Die Variablenvorbelegungen erfolgen über Eingabemasken mit Parameterzuordnung von In-, Out- oder In/Out-Parametern bzw. Konstanten oder Literalen.

Eine weitere vorteilhafte Ausgestaltung der Erfindung für ein System liegt darin, dass komplette oder teilweise Lösungen mit ihren Verschaltungen ladbar und aufrufbar sind. Dadurch wird das automatische Testen von Programmen (z.B. automatische Regressionstests) sehr leicht ermöglicht.

Eine weitere vorteilhafte Ausgestaltung der Erfindung für ein System liegt darin, dass während des Ablaufs der asynchron kooperierenden State Machines das jeweils aktuelle grafische Element im Aktivity-Diagramm optisch auf einer Anzeigevorrichtung kennzeichenbar ist. Ein Anwender kann somit im Activity-Diagramm den Programmablauf verfolgen und dabei ein positives, aber auch ein negatives Verhalten des Programmes visualisiert erkennen.

Eine weitere vorteilhafte Ausgestaltung der Erfindung für ein System liegt darin, dass die Fehlerzustände visuell hervorhebbar sind. Dadurch wird der Anwender auf Fehler direkt aufmerksam gemacht.

Eine weitere vorteilhafte Ausgestaltung der vorliegenden Erfindung liegt darin, dass das erfindungsgemäße Verfahren durch ein Computerprogramm implementiert ist. Dadurch können eventuelle Modifizierungen bzw. Anpassungen leicht durchgeführt werden.

Eine weitere vorteilhafte Ausgestaltung der vorliegenden Erfindung liegt darin, dass das Computerprogramm für das erfindungsgemäße Verfahren auf einem Datenträger gespeichert ist. Dadurch ist das Verfahren bezüglich der Logistik und Verteilung leicht handhabbar.

Eine weitere vorteilhafte Ausgestaltung der vorliegenden Erfindung liegt darin, dass das Computerprogramm für das erfindungsgemäße Verfahren auf einer Datenverarbeitungseinrichtung installiert ist. Dadurch wird die Performance erhöht.

Weitere Vorteile und Details der Erfindung ergeben sich anhand der nun folgenden Beschreibung vorteilhafter Ausführungsbeispiele und in Verbindung mit den Figuren. Soweit in unterschiedlichen Figuren Elemente mit gleichen Funktionalitäten beschrieben sind, sind diese mit gleichen Bezugszeichen gekennzeichnet. Es zeigen:
- FIG 1: in einer Übersichtsdarstellung die "Unternehmenspyramide" mit drei Steuerungsebenen,
- FIG 2: ein beispielhaftes Übersichtsbild mit Software- und Hardwareeinheiten für MES-Lösungen,
- FIG 3: ein Beispiel einer State Machine,
- FIG 4: ein Beispiel für die Kooperation von State Machines,
- FIG 5: die Aufteilung einer MES-Anwendung in unabhängig laufende Teileinheiten und
- FIG 6: eine Projektieroberfläche für Activity-Diagramme.

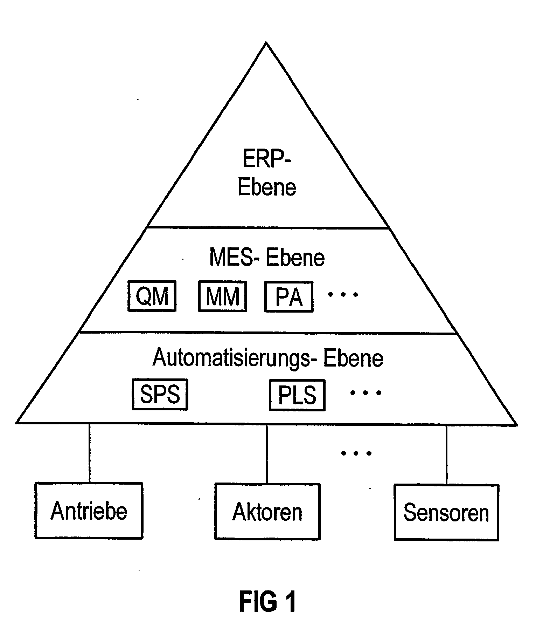

Die Darstellung gemäß FIG 1 zeigt in einer Übersichtsdarstellung die drei Steuerungsebenen, wie sie üblicherweise in einem produzierenden bzw. fertigenden Unternehmen zu finden sind. Durch die Pyramidenform wird ausgedrückt, dass nach oben hin eine Verdichtung der Informationen stattfindet. Die oberste Ebene ist die ERP-Ebene (Enterprise Ressource Planning. Auf dieser Unternehmensleitebene werden üblicherweise die betriebswirtschaftlichen und vertrieblichen Aufgaben in einem Unternehmen durchgeführt (z.B. Finanzwesen, Vertriebswesen, Personalwesen, Berichterstattung). Aber auch produktionsanlagenübergreifende logistische Aufgaben (z.B. Auftrags-und Materialverwaltung) werden auf dieser Ebene durchgeführt. Das System SAP R/3 ist ein ERP-System, das auf der Unternehmensleitebene sehr häufig verwendet wird.

Die unterste Ebene der Pyramide ist die Automatisierungs-Ebene (Controls). Auf dieser Ebene kommen üblicherweise speicherprogrammierbare Steuerungen (SPS) in Verbindung mit Visualisierungs- und Prozessleitsystemen (PLS) zum Einsatz. Die Antriebe, Aktoren und Sensoren der Produktions- und/oder Fertigungseinrichtungen stehen direkt mit den Systemen dieser Ebene in Verbindung.

Das Verbindungsglied zwischen der ERP-Ebene und der Automatisierungs-Ebene wird durch die MES-Ebene gebildet. Die Applikationen der MES-Ebene sorgen somit für eine vertikale Integration zwischen der ERP-Ebene und der Automatisierungs-Ebene. Die MES-Applikationen müssen einerseits die Grobplanungen der ERP-Systeme um produktionsanlagenspezifische Feinplanungen ergänzen und an die Systeme der Automatisierungs-Ebene weiterleiten, andererseits ist es Aufgabe der MES-Applikationen produktionsrelevante Daten der Automatisierungs-Ebene aufzunehmen, aufzubereiten und an die ERP-Ebene (Unternehmensleitebene) weiterzuleiten.

Typische MES-Applikationen sind u.a. Quality Management (QM), Maintenance Management (MM), Performance Analysis (PA), Process Management, Labor Management, Asset Management. Durch jeweils drei Punkte wird in FIG 1 ausgedrückt, dass sich auf einer Ebene weitere Elemente (Applikationen, Systeme etc.) befinden können.

MES-Systeme bzw. ERP-Systeme enthalten in der Regel ein so genanntes Laufzeitsystem zur zeitlichen Ablaufsteuerung der beteiligten Komponenten (Teilkomponenten, Module, Tasks, Prozesse des Betriebssystems etc.), sowie ein so genanntes Engineeringsystem zum Erstellen und Editieren von Programmen, welche zur Ausführung im Laufzeitsystem vorgesehen sind.

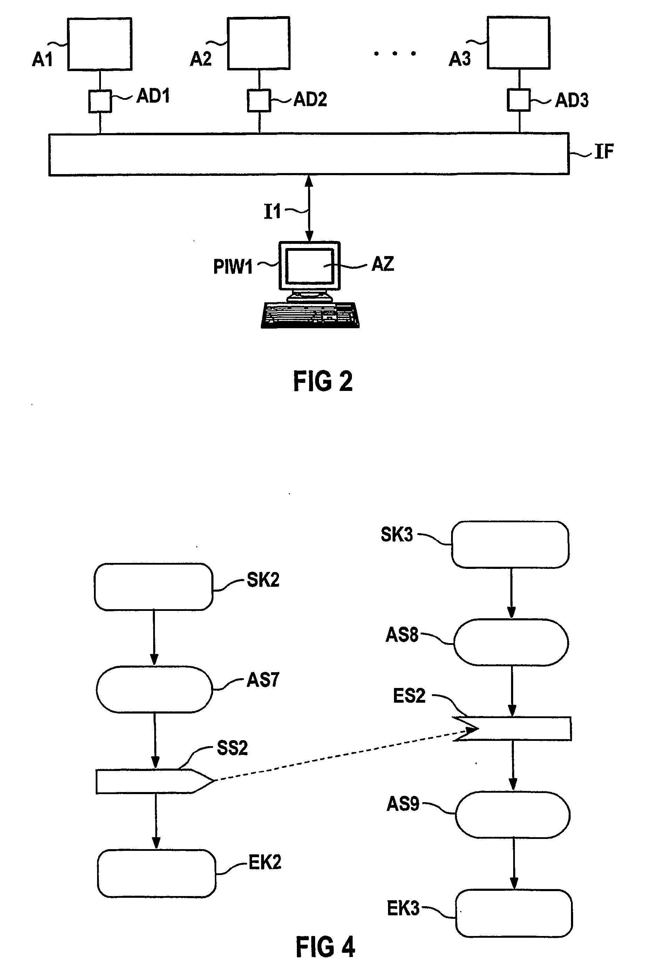

Die Darstellung gemäß FIG 2 zeigt ein beispielhaftes Übersichtsbild mit Software- und Hardwareeinheiten für MES-Lösungen. Die einzelnen MES-Applikationen A1 bis A3 sind über Adapter AD1 bis AD3 mit einem Rahmenprogramm (Framework) IF verbunden. Über einen bidirektionalen Informationspfad 11 ist ein Benutzerarbeitsplatz PIW1 mit dem Rahmenprogramm IF gekoppelt und kann somit die daran hängenden bzw. integrierten MES-Applikationen verwalten und überwachen. Der Benutzerarbeitsplatz PIW1 besteht üblicherweise aus einer Anzeigevorrichtung (Monitor, Display, etc.), einer Datenverarbeitungsanlage (z.B. PC) mit Prozessor und Speichereinrichtungen sowie Eingabeeinheiten (Keyboard, Maus, etc.). Die MES-Applikationen A1 bis A3 sowie das Rahmenprogramm IF können auf eigenen Datenverarbeitungseinheiten bzw. Prozessoren ablaufen, es ist aber auch möglich, dass sie auf der Datenverarbeitungseinheit des PIW1 ablaufen.

Über Adapter AD1 bis AD3 sind die jeweiligen MES-Applikationen A1 bis A3 mit dem Rahmenprogramm IF verbunden. Die Verbindung zwischen den Adaptern AD1 - AD3 mit dem Rahmenprogramm IF geschieht über geeignete Datenformate (z.B. XML), geeignete Protokolle (XOP, OPC, etc.) und geeignete Transportmechanismen (z.B. DCOM oder MSMQ). Auch HTTP (Hyper Text Transfer Protocol) kann hierbei verwendet werden. Auch das auf XML eXtensible Markup Language) beruhende Protokoll SOAP (Simple Object Access Protocol) kann für die Integration der Adapter AD1 - AD3 an das Rahmenprogramm IF verwendet werden.

Die Adapter sind somit die Koppelbausteine zwischen dem Rahmenprogramm IF und den Applikationen. Über die Adapter können somit auch an sich heterogene Applikationen miteinander verbunden werden, und durch die Integration mit dem Rahmenprogramm IF ist es möglich, zwischen den Applikationen zu kommunizieren und Datenaustausch zu betreiben. Die Adapter sind Softwaremodule, die Verbindungen zu verschiedenen Anwendungen bzw. Applikationen herstellen. In typischen Integrationsszenarien sind dies Integrationen zu Systemen aus der MES-, ERP-, SCADA- oder Controls-Welt. Ein Adapter bietet Funktionalität, um eine anzukoppelnde Komponente zu starten, zu bedienen, etc. Ein Adapter erlaubt den Zugriff auf Daten und Funktionen der anzukoppelnden Anwendung bzw. Applikation, stellt bestimmte Laufzeitdaten zur Verfügung und erlaubt das Laden von Engineeringinformationen aus der anzukoppelnden Anwendung bzw. Applikation. Adapter können sich hinsichtlich ihres Aufbaus und Umfangs unterscheiden. So können Adapter z.B. fest programmiert sein oder sie können konfiguriert bzw. modelliert werden. Auch bezüglich der Möglichkeiten des Zugriffs auf die anzukoppelnde Applikation können sie sich unterscheiden, so können z.B. Adapter nur einen datentechnischen Zugang gestatten, es ist aber auch möglich, dass Adapter einen Zugang auf höherwertige Geschäftsabläufe zulassen. Beim Hochfahren werden die Adapter mit den hinterlegten Modellen und Züstandsinformationen geladen. Zur Laufzeit wird dann überprüft, ob und wie die unterschiedlichen integrierten Applikatonen bzw. Anwendungen zusammenpassen. Über eine Visualisierungs- bzw. Monitoringkomponente ist es möglich, den Status eines Adapters abzufragen und am Benutzerarbeitsplatz PIW1 darzustellen (auch graphisch). Durch Adapter erhält das System und auch der Anwender eine standardisierte und einheitliche Sicht auf Applikationen (je nachdem, welche Abstraktionsebene bei den Adaptern vorhanden ist).

Eine weitere Möglichkeit Softwarekomponenten zu integrieren, ist es, Wrapper einzusetzen. Ein Wrapper bildet das API (Application Programmable Interface) einer Fremdkomponente (z.B. eine MES-Applikation) in das Objektmodell des Rahmenprogrammes ab. So wird z.B. aus einer Methode des API der Fremdkomponente eine Methode des Rahmenprogramms bzw. aus einem Integer-Datentyp des API der Fremdkomponente wird ein Integer-Datentyp des Rahmenprogramms.

Neben MES-Applikationen können auch Applikationen aus der Unternehmensleitebene (Enterprise Resource Planning-Ebene) und/aus der Automatisierungsebene (Controls-Ebene) über das Rahmenprogramm IF integriert werden und über den Arbeitsplatz PIW1 (das Acronym PIW steht für Personalized Industrial Workplace) überwacht bzw. verwaltet werden. Das Rahmenprogramm IF bildet somit eine Integrationsplattform für den gesamten industriellen Bereich. Unterschiedliche Applikationen aus der Unternehmensleitebene, der MES-Ebene und der Automatisierungsebene lassen sich durch das Rahmenprogramm IF einfach und wirtschaftlich mit Hilfe von Adaptern und/oder Wrappern integrieren. Das Rahmenprogramm IF ist somit als Middleware-Plattform und als Manufacturing Application Integration-Werkzeug anzusehen. Über den Arbeitsplatz PIW1 kann ein Benutzer (z.B. der Anlagenfahrer) die jeweiligen Zustände der zu überwachenden Applikationen sehen, und er kann auch auf Daten und auf Methoden der Applikationen zugreifen, und weiterhin kann er durch diesen Zugriff Applikationen miteinander in Verbindung setzen.

Das Rahmenprogramm IF ermöglicht es somit, zum einen eine vertikale Integration von Applikationen aus unterschiedlichen Unternehmensebenen zu erreichen und zum anderen ermöglicht das Rahmenprogramm IF eine horizontale Integration von Applikationen der MES-Ebene. Im Rahmenprogramm IF wird der Informationsaustausch von Komponenten untereinander über gängige Datenformate (z.B. XML), gängige Protokolle (XOP, OPC, etc.) und gängige Transportmechanismen (z.B. DCOM, HTTP oder MSMQ) realisiert.

Der Arbeitsplatz PIW1 stellt für einen Benutzer an der Frontendseite von MES-Applikationen oder anderen Applikationen aus dem Unternehmen ein "One Window to the World" dar. Das heißt, der Arbeitsplatz ermöglicht, über eine gemeinsame einheitliche Oberfläche einen integrativen Zugang auf unterschiedliche, auch heterogene Anwendungen im Unternehmen. Der Benutzer des Arbeitsplatzes PIW1 kann somit von diesem einen Arbeitsplatz aus alle integrierten MES- oder anderen Anwendungen überwachen und verwalten. Dieser Arbeitsplatz kann über das Internet, das Intranet, LAN (Local Area Network) oder andere denkbare Verbindungen mit den Applikationen verbunden sein. Es ist auch möglich, diesen Arbeitsplatz als mobile Station, z.B. als mobiles Endgerät (PDA, Handy) auszugestalten. Diese Mobilität würde für einen Benutzer noch weitere Vorteile bringen. Der Arbeitsplatz PIW1 enthält weiterhin Eingabehilfsmittel und eine oder mehrere Anzeigevorrichtungen AZ (z.B. Display oder Monitor).

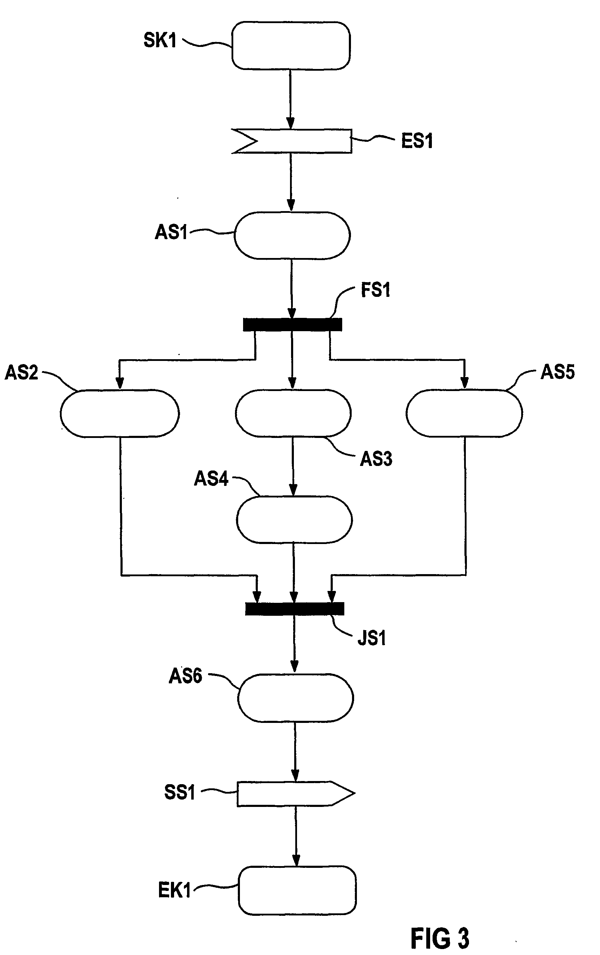

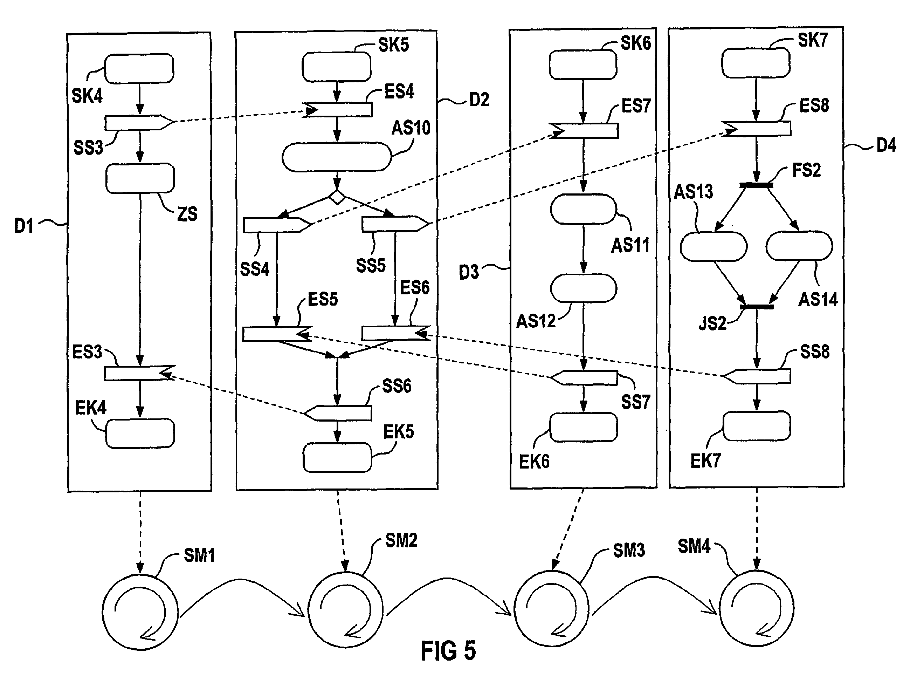

Die Darstellung gemäß FIG 3 zeigt ein Beispiel einer State Machine. State Machines (SM1 - SM4; FIG 5) werden durch so genannten Activity-Diagrammen (D1 - D4; FIG 5) modelliert, die das Verhalten einer State Machine beschreiben. In einem Activity-Diagramm wird ein sequentieller Ablauf beschrieben, der bei einem Startknoten SK1 beginnt und beim Endknoten EK1 endet. Der Programmablauf selbst wird in der Vertikalen von oben nach unten mit Hilfe von Symbolen, die durch Pfeile miteinander verbunden sind, beschrieben. Der Programmablauf selbst folgt von Symbol zu Symbol entlang der Pfeile. In FIG 3 folgt auf den Startknoten SK1 das Empfangssymbol ES1. Liegt für ein Empfangssymbol ES1 eine Nachricht vor, dann wird im Programmablauf fortgefahren, ansonsten wird im Programmablauf solange gewartet, bis eine Nachricht für das Empfangssymbol ES1 eintrifft. Nach dem Empfangssymbol ES1 folgt als nächstes Symbol das Activity-Symbol AS1. Stößt der Programmablauf auf ein Activity-Symbol, dann werden Tätigkeiten ausgeführt, die hinter dem Activity-Symbol hinterlegt sind (z.B. ein Aufruf eines Unterprogramms, Methodenaufrufe etc). In den meisten Fällen werden Skripts ausgeführt, z.B. Visual-Basic-Skripts. Das nächste Symbol im Programmablauf von FIG 3 ist ein Fork-Symbol FS1, dargestellt durch einen waagrechten Balken. Zu jedem Fork-Symbol gibt es ein assoziiertes Joint-Symbol, ebenfalls dargestellt durch einen waagrechten Balken. In FIG 3 ist das das Joint-Symbol JS1. Durch ein Fork-Symbol werden parallele Äste mit parallelen Abläufen aufgespannt, die dann im dazugehörigen Joint-Symbol aufeinander warten. In der Darstellung nach FIG 3 werden durch das Fork-Symbol FS1 drei parallele Äste aufgespannt. Der linke Ast beinhaltet nur das Activity-Symbol AS2, der rechte Ast beinhaltet nur das Activity-Symbol AS5 und der mittlere Ast beinhaltet die beiden Activity-Symbole AS3 und AS4. Durch die Activity-Symbole ist dargestellt, dass Tätigkeiten ausgeführt werden. Wenn nun die Tätigkeiten aller drei Äste beendet sind, dann wird im Programmablauf mit dem auf das Joint-Symbol JS1 folgende Symbol, in FIG 3 das Activity-Symbol AS6, fortgefahren. Nach dem Ausführen der mit dem Activity-Symbol AS6 verbundenen Tätigkeit stößt der Programmablauf auf das Sendesymbol SS1. Durch Sendesymbole werden Nachrichten verschickt. Nach dem Abschicken der Nachricht, dargestellt durch das Sendesymbol SS1, geht der Programmablauf in den Endknoten EK1 und beendet sich. Activity-Diagramme können aber auch als permanent laufende Prozesse modelliert werden.

Durch solche Activity-Diagramme werden Prozesse beschrieben, die das Verhalten von Teileinheiten für Softwarelösungen, insbesondere MES-Lösungen, darstellen. Eine Lösung für ein MES-System besteht üblicherweise aus sehr vielen solcher Prozessen, die dann für sich einzeln als Acitivity-Diagramm beschrieben sind und die aber untereinander asynchron durch den Nachrichtenaustausch über Sende- und Empfangssymbole kommunizieren. Dadurch entsteht eine lose Kopplung solcher Prozesse. Durch diese lose Kopplung können die einzelnen Prozesse einer MES-Lösung separat und mehr oder wenig unabhängig voneinander erstellt werden. Die lose Kopplung erlaubt auch eine sehr einfache Wiederverwendung von Prozessen, Teilprozessen oder einer Ansammlung von Prozessen für bestimmte Teilaufgaben in einem MES-System.

Die Darstellung gemäß FIG 4 zeigt ein Beispiel für die Kooperation von State Machines (SM1 - SM4; FIG 5). In FIG 4 sind die Abläufe von zwei State Machines dargestellt. Die State Machine im linken Teil von FIG 4 wird durch das Activity-Diagramm (D1 - D4; FIG 5) mit dem Startknoten SK2, dem Activity-Symbol AS7, dem Sendesymbol SS2 und dem Endknoten EK2 dargestellt. Die State Machine auf der rechten Seite von FIG 4 wird durch das Activity-Diagramm mit dem Startknoten SK3, dem Activity-Symbol AS8, dem Empfangssymbol ES2, dem Activity-Symbol AS9 und dem Endknoten EK3 dargestellt. Durch den gestrichelten Pfeil vom Sendesymbol SS2 des linken Activity-Diagramms zum Empfangssymbol ES2 des rechten Activity-Diagramms wird dargestellt, dass die beiden State Machines lose miteinander gekoppelt sind. Im rechten Activity-Diagramm kann mit dem Programmablauf im Empfangssymbol ES2 erst dann fortgefahren werden, wenn vom linken Activity-Diagramm durch das Sendesymbol SS2 eine Nachricht an das Empfangssymbol ES2 gesendet wurde. Im Empfangssymbol ES2 wird solange mit der Fortführung des Programmablaufs gewartet, bis diese Nachricht eintrifft.

Die Darstellung gemäß FIG 5 zeigt die Aufteilung eines MES-Systems in vier unabhängig laufende Teileinheiten (z.B. einfache oder komplexe Geschäftsprozesse), die jeweils den State Machines SM1 bis SM4 entsprechen. Das Verhalten der State Machines SM1 - SM4 wird jeweils durch die Activity-Diagramme D1 bis D4 beschrieben. In der Darstellung gemäß FIG 5 sind diese State Machines SM1 bis SM4 in einer datenflussdiagrammähnlichen Notation am unteren Bildrand dargestellt. Jede dieser State Machines SM1 bis SM4 entspricht einer MES-Anwendung oder MES-Komponente oder MES-Teilkomponente. Das Verhalten jeder dieser Teilkomponenten wird durch Activity-Diagramme D1 - D4 beschrieben, die oberhalb der Datenflussdiagramme dargestellt sind. In den rechteckigen Kästen oberhalb der Datenflussdiagramm-Notation sind jeweils die Activity-Diagramme dargestellt, die den Programmablauf beschreiben, der einer State Machine SM1 - SM4 zugeordnet ist. Diese Zuordnung der Activity-Diagramme zu der jeweiligen State Machine wird durch gestrichelte Pfeile vom jeweiligen Kasten zum jeweiligen Bubble (Kreis, Knoten), der einer State Machine entspricht, dargestellt.

Im linken Activity-Diagramm D1 ist als neues Symbol das Zustandssymbol ZS eingeführt. Damit können z.B. Wartezustände definiert werden. Im nächsten Acticity-Diagramm D2, das der State Machine SM2 zugeordnet ist, ist als weiteres neues Symbol ein Abfragesymbol eingeführt. Dieses Abfragesymbol wird durch eine kleine Raute dargestellt und folgt im Programmablauf der State Machine SM2 auf das Activity-Symbol AS10. In Abhängigkeit von dem Ergebnis einer Abfrage wird entweder der linke oder der rechte Ast durchlaufen. Im erfindungsgemäßen System bzw. Verfahren ist eine Abfrage mit einem Interpreter gekoppelt, der pro Zweig eine Regel aufstellen lässt und der Ast, dessen Regel als erstes zutrifft, wird durchlaufen. In der Darstellung gemäß FIG 5 sind die Flow Chart Bubbles (Kreise, Knoten), die jeweils den State Machines SM1 bis SM4 entsprechen, durch Pfeile miteinander verbunden. Dadurch wird dargestellt, dass auf der Ebene der Datenflussdiagramme (in einer datenflussdiagrammähnlichen Notation dargestellt) Kommunikationsverbindungen zwischen den dazugehörenden Activity-Diagrammen verschaltet werden können. Ein Anwender kann von der Realisierung dieser Verschaltungen abstrahieren. Unabhängig davon, welche Kommunikationsmittel (z.B. MSMQ, HTTP oder DCOM) vorhanden sind, wird entsprechend der Verschaltung eine dazugehörige Verbindung implementiert.

Wenn ein Anwender Activity-Diagramme D1 - D4 modelliert und die asynchrone Kommunikation zwischen den Activity-Diagrammen durch Verschaltungen herstellt, wird parallel dazu ein entsprechendes Laufzeitsystem erstellt. In diesem Laufzeitsystem sind dann die Prozesse und die Verschaltungen sofort ablauffähig und testbar. Die Diagramme können z.B. im Einzelschritt getestet werden oder auch durch rekursive Einzelschritte. Es liegt also ein integriertes Editier- und Laufzeitsystem vor. Ein Anwender, der ein Engineering durchführt, erstellt somit gleichzeitig ein dazugehörendes Laufzeitsystem.

Wenn ein Anwender z.B. eine Verschaltung zwischen zwei State Machines projektiert, dann wird dazu implizit eine Verbindung erstellt, z.B. eine Microsoft Message Queue oder eine HTTP-Verbindung. Auch für die einzelnen Elemente der Activity-Diagramme werden bei ihrer Modellierung automatisch für die Implementierung dazugehörige Implementierungselemente erzeugt. Z.B. als Prozesse und/oder Speicherbereiche im Betriebssystem.

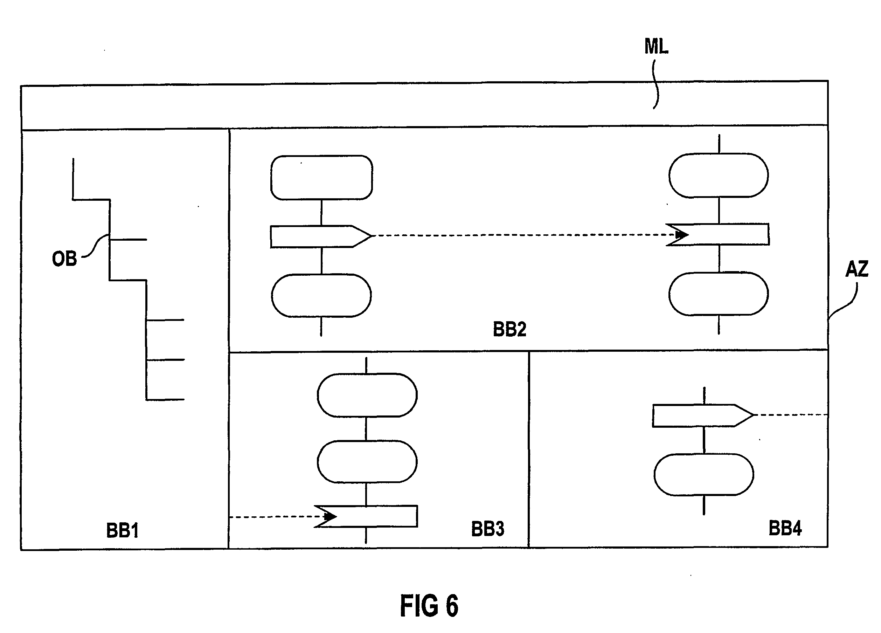

Die Darstellung gemäß FIG 6 zeigt eine Projektieroberfläche für Activity-Diagramme. Auf einer Anzeigevorrichtung AZ (z.B. Monitor oder Display) sind unterschiedliche Bildschirmbereiche BB1 bis BB4 dargestellt. Weiterhin ist am oberen Bildrand eine Menüleiste ML dargestellt, auf der Funktionsknöpfe hinterlegt sind, die über Eingabehilfsmittel wie z.B. eine Maus oder Keyboard angewählt werden können. In der Menüleiste ML können auch die Symbole der Activity-Diagramme vorhanden sein, die dann mit einem drag&drop-Mechanismus auf die entsprechenden Bildschirmbereiche gezogen werden können. In einem Bildschirmbereich BB2 bis BB4 können jeweils ein Activity-Diagramm oder mehrere dargestellt werden. Der Bildschirmbereich BB1 zeigt stilistisch in explorerähnlicher Notation einen Objektbaum OB, der das zugrunde liegende Softwaresystem (z.B. ein Rahmenprogramm, Framework) repräsentiert. Über drag&drop-Mechanismen können Elemente des Objektbaumes OB mit Activity-Diagrammen verbunden werden. D.h., Objekte oder Elemente des Objektbaumes OB werden mit Activity-Diagrammen, die einen Ablauf repräsentieren, hinterlegt. Verschaltungen zwischen Activity-Diagrammen können über Datenflussdiagramme erfolgen, wie in FIG 5 dargestellt. Eine weitere Möglichkeit der Verschaltung geschieht über so genannte Projektiermasken, die den Sende- und Empfangssymbolen der Activity-Diagramme zugeordnet sind. Durch diese Projektiermasken werden durch einen Anwender die zugehörenden Empfangs- bzw. Sendesymbole in den jeweiligen Diagrammen ausgewählt. Weiterhin wird über die Projektiermasken festgelegt, welche Nachrichten ausgetauscht werden und von welchem Typ (z.B. integer, real oder auch vom Anwender selbst definierte Typen) diese Nachrichten sind. Verschaltungen können aber auch auf der Ebene der Objektbäume OB erfolgen. Auch dies via drag&drop-Mechanismen.

Ein Anwender hat somit eine mächtige Projektierungsumgebung. Beim Erstellen einer Projektierung, d.h. beim Modellieren von Activity-Programmen werden dazu automatisch ein dazugehöriges Laufzeitsystem erstellt, in dem die Activity-Diagramme ablaufen. Die Activity-Diagramme sind für sich autark und unabhängig erstellbar. Sie laufen dann sequentiell und synchron ab, aber sie kommunizieren asynchron. Durch diese lose Kopplung lassen sich insbesondere MES-Systeme sehr leicht modellieren und realisieren.

In einem anschließenden Deployment werden die Activity-Diagramme bzw. die State Machines (SM1 - SM4; FIG 5) auf Rechner verteilt, in denen sie auch physikalisch ablaufen. Es ist z.B. möglich, dass ein Server mehr als nur ein Activity-Diagramm enthält. Durch ein geeignetes Deployment wird z.B. eine ausgeglichene Lastverteilung erreicht.

Durch die Erfindung wird ein Anwender in mehreren Phasen unterstützt. Er wird als erstes in der Phase der Geschäftsprozessfindung unterstützt, d.h. bei der Modellierung seines Geschäftsprozesses. Durch die automatische Erstellung eines dazugehörenden Laufzeitsystems wird ein Anwender weiterhin unterstützt, einen gefundenen Geschäftsprozess in eine IT-Lösung einzubringen. Dies geschieht automatisch und ohne Designbruch. In einer dritten Phase kann ein Anwender einen definierten Geschäftsprozess beobachten und kontrollieren. Dieses System ist somit auch zum Testen einsetzbar. Durch eine geeignete Visualisierung, z.B. Graphik und Farbeinsatz, kann das System auch mit einer Animation hinterlegt werden.

MES-Systeme bzw. ERP-Systeme enthalten in der Regel ein so genanntes Laufzeitsystem zur zeitlichen Ablaufsteuerung der beteiligten Komponenten (Teilkomponenten, Module, Tasks, Prozesse des Betriebssystems etc.), sowie ein so genanntes Engineeringsystem zum Erstellen und Editieren von Programmen, welche zur Ausführung im Laufzeitsystem vorgesehen sind.

Die Elemente der Activity-Diagramme sind sofort ausführbar, da sie auf ausführbaren Code verweisen (z.B. Visual Basic Skripts oder COM-Objekte).

Ein Anwender kann im Single-Step-Modus (Einzelschrittmodus) oder im Komplettdurchlauf (Schnelldurchlauf der Einzelschritte) das Debugging durchführen.

Zusammenfassend betrifft die Erfindung ein System und ein Verfahren zum Testen und/oder Debuggen von Laufzeitsystemen, insbesondere von Laufzeitsystemen zur Lösung von MES-Aufgaben (Manufacturing Execution Systems), wobei ein Anwender mit einem Editor grafische Elemente,zu einem auf einer Anzeigevorrichtung visualisierbaren Activity-Diagramm verknüpft, wobei zwischen den Activity-Diagrammen durch geeignete Mittel Kommunikationsbeziehungen herstellbar sind und wobei durch ein Activity-Diagramm der Ablauf einer asynchron kooperierenden State Machine beschrieben wird.

Das oben beschriebene erfindungsgemäße System bzw. Verfahren lässt sich als Computerprogramm in dafür bekannten Sprachen implementieren. Ein derartig implementiertes Computerprogramm kann in ebenfalls bekannter Weise über elektronische Datenwege, aber auch auf Datenträgern (z.B. Computerprogrammprodukten) abgespeichert und transportiert werden.

## Patentansprüche

1. Verfahren zum Testen und/oder Debuggen von Laufzeitsystemen zur Lösung von MES-Aufgaben, bei dem ein Anwender mit einem Editor grafische Elemente zu einem oder mehreren auf einer Anzeigevorrichtung (AZ) visualisierbaren Activity-Diagramm(en) (D1 - D4) verknüpft, wobei zwischen den Activity-Diagrammen (D1 - D4) durch geeignete Mittel Kommunikationsbeziehungen herstellbar sind und wobei durch ein Activity-Diagramm (D1 - D4) der Ablauf einer asynchron kooperierenden State Machine (SM1 - SM4) beschrieben wird, mit folgenden weiteren Schritten:
- Ermittlung und Beschreibung der relevanten Geschäfts- und Produktionsprozesse zur Lösung der MES-Aufgabe,
- Definition und Beschreibung der relevanten Business Objekte bzw. Komponenten durch asynchron kooperierende State Machines (SM1 - SM4),
- Zerlegung der relevanten Geschäfts- und Produktionsprozesse in disjunkte, sequentiell ablaufende Teilprozesse mit Synchronisations- und Datenübertragungsnachrichten zwischen diesen Teilprozessen, wobei die Teilprozesse auf Business Objekten operieren und selbst Objekte sind,
- Einzeltest der Teilprozesse im Zusammenwirken durch schrittweisen oder kompletten Durchlauf durch die Teilprozesse,
- dem Anwender wird visualisiert, welches Element im Activity-Diagramm (D1 - D4) aktiv ist,
- der Anwender steuert das Fortschreiten zum nächsten Schritt, wobei Schritte wiederholbar oder überspringbar sind.

2. Verfahren nach Anspruch 1,
**dadurch gekennzeichnet,**
**dass** die Teilprozesse aus Einzelschritten bestehen, die auf ausführbaren Code verweisen.

3. Verfahren nach Anspruch 1 oder 2,
**dadurch gekennzeichnet,**
**dass** die Steuerung des Laufzeitsystems in Elementen des Activity-Diagramms (D1 - D4) erfolgt.

4. Verfahren nach einem der Ansprüche 1 bis 3,
**dadurch gekennzeichnet,**
**dass** die Variablenvorbelegungen für die Einzelschritte statisch oder dynamisch erfolgt.

5. Verfahren nach einem der Ansprüche 1 bis 4,
**dadurch gekennzeichnet,**
**dass** komplette oder teilweise Lösungen mit ihren Verschaltungen geladen und aufgerufen werden.

6. Verfahren nach einem der Ansprüche 1 bis 5,
**dadurch gekennzeichnet,**
**dass** während des Ablaufs der asynchron kooperierenden State Machines das jeweils aktuelle grafische Element im Aktivity-Diagramm (SM1 - SM4) optisch auf einer Anzeigevorrichtung gekennzeichnet wird.

7. Verfahren nach einem der Ansprüche 1 bis 6,
**dadurch gekennzeichnet,**
**dass** die Fehlerzustände visuell hervorgehoben werden.

8. System zum Testen und/oder Debuggen von Laufzeitsystemen zur Lösung von MES-Aufgaben, wobei von einem Anwender mit einem Editor grafische Elemente zu einem oder mehreren auf einer Anzeigevorrichtung (AZ) visualisierbaren Activity-Diagramm(en) (D1 - D4) verknüpfbar sind, wobei zwischen den Activity-Diagrammen (D1 - D4) durch geeignete Mittel Kommunikationsbeziehungen herstellbar sind und wobei durch ein Activity-Diagramm (D1 - D4) der Ablauf einer asynchron kooperierenden State Machine (SM1 - SM4) beschreibbar ist, mit folgenden Merkmalen:
- erste Eingabe- und/oder Anzeigemittel (AZ) zur Ermittlung und Beschreibung der relevanten Geschäfts- und Produktionsprozesse zur Lösung der MES-Aufgabe,
- zweite Eingabe- und/oder Anzeigemittel (AZ) zur Definition und Beschreibung der relevanten Business Objekte bzw. Komponenten durch asynchron kooperierende State Machines (SM1 - SM4),
- dritte Eingabe- und/oder Anzeigemittel (AZ) zur Zerlegung der relevanten Geschäfts- und Produktionsprozesse in disjunkte, sequentiell ablaufende Teilprozesse mit Synchronisations- und Datenübertragungsnachrichten zwischen diesen Teilprozessen, wobei die Teilprozesse auf Business Objekten operieren und selbst Objekte sind,
- Testmittel zum Einzeltest der Teilprozesse im Zusammenwirken durch schrittweisen oder kompletten Durchlauf durch die Teilprozesse,
- Anzeigevorrichtung (AZ) zur Visualisierung, welches Element im Activity-Diagramm (D1 - D4) aktiv ist,
- Eingabehilfsmittel zum Steuern des Fortschreiten zum nächsten Schritt, wobei Schritte wiederholbar oder überspringbar sind.

9. System nach Anspruch 8,
**dadurch gekennzeichnet,**
**dass** die Teilprozesse aus Einzelschritten bestehen, die auf ausführbaren Code verweisen.

10. System nach Anspruch 8 oder 9,
**dadurch gekennzeichnet,**
**dass** die Steuerung des Laufzeitsystems in Elementen des Activity-Diagramms (D1 - D4) erfolgt.

11. System nach einem der Ansprüche 8 bis 10,
**dadurch gekennzeichnet,**
**dass** die Variablenvorbelegungen für die Einzelschritte statisch oder dynamisch erfolgt.

12. System nach einem der Ansprüche 8 bis 11,
**dadurch gekennzeichnet,**
**dass** komplette oder teilweise Lösungen mit ihren Verschaltungen ladbar und aufrufbar sind.

13. System nach einem der Ansprüche 8 bis 12,
**dadurch gekennzeichnet,**
**dass** während des Ablaufs der asynchron kooperierenden State Machines das jeweils aktuelle grafische Element im Aktivity-Diagramm (D1 - D4) optisch auf einer Anzeigevorrichtung (AZ) kennzeichenbar ist.

14. System nach einem der Ansprüche 8 bis 13,
**dadurch gekennzeichnet,**
**dass** die Fehlerzustände visuell hervorhebbar sind.

15. Computerprogramm, das ein Verfahren nach einem der Ansprüche 1 bis 7 implementiert.

16. Datenträger, auf dem ein Computerprogramm nach Anspruch 15 gespeichert ist.

17. Datenverarbeitungseinrichtung (PIW1) auf der ein Computerprogramm nach Anspruch 15 installiert ist.

## Claims

1. A method for testing and/or debugging runtime systems for solving MES problems, in which a user uses an editor to combine graphical elements to form one or more activity diagram(s) (D1 - D4) which can be visually depicted on a display device (AZ), wherein communication relationships can be created between the activity diagrams (D1 - D4) using suitable means, and wherein an activity diagram (D1 - D4) describes the flow of an asynchronously cooperating state machine (SM1 - SM4), said method having the following steps:
- determining and describing the relevant business processes and production processes for solving the MES problem,
- defining and describing the relevant business objects or components by means of asynchronously cooperating state machines (SM1 - SM4),
- breaking down the relevant business processes and production processes into disjunct sequentially executing subprocesses, including synchronisation messages and data transmission messages between these subprocesses, wherein the subprocesses operate on business objects and are objects themselves,
- individual testing of the subprocesses in the interaction by running through the subprocesses in single steps or completely,
- visually depicting to the user which element is active in the activity diagram (D1 - D4),
- progressing to the next step under the control of the user, wherein steps can be repeated or skipped.

2. The method as claimed in Claim 1,
**characterised in that**
the subprocesses consist of single steps which refer to executable code.

3. The method as claimed in Claim 1 or 2,
**characterised in that**
the control of the runtime system takes place in elements of the activity diagram (D1 - D4).

4. The method as claimed in one of the Claims 1 to 3,
**characterised in that**
the pre-assignments for the variables for the single steps take place statically or dynamically.

5. The method as claimed in one of the Claims 1 to 4,
**characterised in that**
complete or partial solutions are loaded and called with their interconnections.

6. The method as claimed in one of the Claims 1 to 5,
**characterised in that**
the current graphical element in the activity diagram (SM1 - SM4) is optically identified in each case on a display device during the flow of the asynchronously cooperating state machines.

7. The method as claimed in one of the Claims 1 to 6,
**characterised in that**
the error states are visually highlighted.

8. A system for testing and/or debugging runtime systems for solving MES problems, wherein graphical elements can be combined by a user using an editor to form one or more activity diagram(s) (D1 - D4) which can be visually depicted on a display device (AZ), wherein communication relationships can be created between the activity diagrams (D1 - D4) using suitable means, and wherein the flow of an asynchronously cooperating state machine (SM1 - SM4) can be described by an activity diagram (D1 - D4), said system having the following features:
- first input and/or display means (AZ) for determining and describing the relevant business processes and production processes for solving the MES problem,
- second input and/or display means (AZ) for defining and describing the relevant business objects or components by means of asynchronously cooperating state machines (SM1 - SM4),
- third input and/or display means (AZ) for breaking down the relevant business processes and production processes into disjunct sequentially executing subprocesses, including synchronisation messages and data transmission messages between these subprocesses, wherein the subprocesses operate on business objects and are objects themselves,
- test means for individual testing of the subprocesses in the interaction by running through the subprocesses in single steps or completely,
- display device (AZ) for visually depicting to the user which.element is active in the activity diagram (D1 - D4),
- input means for controlling the progression to the next step, wherein steps can be repeated or skipped.

9. The system as claimed in Claim 8,
**characterised in that**
the subprocesses consist of single steps which refer to executable code.

10. The system as claimed in Claim 8 or 9,
**characterised in that**
the control of the runtime system takes place in elements of the activity diagram (D1 - D4).

11. The system as claimed in one of the Claims 8 to 10,
**characterised in that**
the pre-assignments for the variables for the single steps take place statically or dynamically.

12. The system as claimed in one of the Claims 8 to 11,
**characterised in that**
complete or partial solutions can be loaded and called with their interconnections.

13. The system as claimed in one of the Claims 8 to 12,
**characterised in that**
the current graphical element in the activity diagram (D1 - D4) can be optically identified in each case on a display device (AZ) during the flow of the asynchronously cooperating state machines.

14. The system as claimed in one of the Claims 8 to 13,
**characterised in that**
the error states can be visually highlighted.

15. A computer program which implements a method as claimed in one of the Claims 1 to 7.

16. A data medium on which is stored a computer program as claimed in Claim 15.

17. A data processing entity (PIW1) on which is installed a computer program as claimed in Claim 15.

## Revendications

1. Procédé de test et/ou de débogage de systèmes d'exécution destinés à résoudre des problèmes MES, pour lequel un utilisateur lie à un éditeur des éléments graphiques relatifs à un ou plusieurs diagramme(s) (D1 - D4) d'activités, qui peuvent être visualisés sur un dispositif (AZ) d'affichage, des relations de communication pouvant être établies entre les diagrammes (D1 - D4) d'activités par des moyens appropriés et la procédure d'un automate fini (SM1 - SM4) coopérant de manière asynchrone étant décrite par un diagramme (D1 - D4) d' activités,
Ayant d'autres étapes suivantes :
- Détermination et description des processus pertinents relatifs à l'entreprise et de production destinés à résoudre des problèmes MES,
- Définition et description des objets ou composants commerciaux pertinents par des automates finis (SM1
- SM4) coopérant de manière asynchrone,
- Décomposition des processus pertinents relatifs à l'entreprise et de production en sous-processus disjoints, se déroulant en séquentiel, ayant des messages de synchronisation et de transmission de données entres ces sous-processus, les sous-processus opérant sur des objets commerciaux et étant eux-mêmes des objets,
- Test unique des sous-processus en coopération par un parcours par étapes ou complet par les sous-processus,
- On visualise à l'utilisateur, quel élément est actif dans le diagramme (D1 - D4) d'activités,
- L'utilisateur commande l'avancement relatif à la prochaine étape, les étapes pouvant être répétées ou sautées.

2. Procédé selon la revendication 1,
**Caractérisé en ce que**
Les sous-processus se composent d'étapes uniques, qui renvoient au code exécutable.

3. Procédé selon la revendication 1 ou 2,
**Caractérisé en ce que**
La commande du système d'exécution est effectuée en éléments du diagramme (D1 - D4) d'activités.

4. Procédé selon l'une des revendications 1 à 3,
**Caractérisé en ce que**
Les préaffectations de variables sont effectuées pour les étapes uniques de façon statique ou dynamique.

5. Procédé selon l'une des revendications 1 à 4,
**Caractérisé en ce que**
Des solutions complètes ou partielles avec leurs câblages sont chargées ou appelées.

6. Procédé selon l'une des revendications 1 à 5,
**Caractérisé en ce que**
l'élément graphique actuel respectif dans le diagramme (D1 - D4) d'activités est marqué optiquement sur un dispositif d'affichage pendant la procédure des automates finis coopérant de manière asynchrone.

7. Procédé selon l'une des revendications 1 à 6,
**Caractérisé en ce que**
Les états de défauts sont accentués visuellement.

8. Système de test et/ou de débogage de systèmes d'exécution destinés à résoudre des problèmes MES, des éléments graphiques relatifs à un ou plusieurs diagrammes (D1 - D4) d'activités, qui peuvent être visualisés sur un dispositif (AZ) d'affichage, pouvant être liés à un éditeur par un utilisateur, des relations de communication pouvant être établies entre les diagrammes (D1 - D4) d'activités par des moyens appropriés et la procédure d'un automate fini (SM1 - SM4) coopérant de manière asynchrone pouvant être décrite par un diagramme (D1 - D4) d'activités,
Ayant les caractéristiques suivantes :
- des premiers moyens (AZ) de saisie et/ou d'affichage pour la détermination et la description des processus pertinents relatifs à l'entreprise et de production destinés à résoudre des problèmes MES,
- des deuxièmes moyens (AZ) de saisie et/ou d'affichage pour la définition et la description des objets ou composants commerciaux pertinents par des automates finis (SM1 - SM4) coopérant de manière asynchrone,
- des troisièmes moyens (AZ) de saisie et/ou d'affichage pour la décomposition des processus pertinents relatifs à l'entreprise et de production en sous-processus disjoints, se déroulant en séquentiel, ayant des messages de synchronisation et de transmission de données entre ces sous-processus, les sous-processus opérant sur des objets commerciaux et étant eux-mêmes des objets,
- des moyens de test pour le test unique des sous-processus en coopération par le parcours par étapes ou complet par les sous-processus,
- un dispositif (AZ) d'affichage pour la visualisation de l'élément qui est actif dans le diagramme (D1 - D4) d'activités,
- des moyens auxiliaires de saisie pour la commande de l'avancement relatif à la prochaine étape, les étapes pouvant être répétées ou sautées.

9. Système selon la revendication 8,
**Caractérisé en ce que**
Les sous-processus se composent d'étapes uniques, qui renvoient au code exécutable.

10. Système selon la revendication 8 ou 9,
**Caractérisé en ce que**
La commande du système d'exécution est effectuée en éléments du diagramme (D1 - D4) d'activités.

11. Système selon l'une des revendications 8 à 10,
**Caractérisé en ce que**
Les préaffectations de variables pour les étapes uniques sont effectuées de manière statique ou dynamique.

12. Système selon l'une des revendications 8 à 11,
**Caractérisé en ce que**
Des solutions complètes ou partielles avec leurs câblages peuvent être chargées et appelées.

13. Système selon l'une des revendications 8 à 12,
**Caractérisé en ce que**
l'élément graphique actuel respectif dans le diagramme (D1 - D4) d'activités peut être marqué optiquement sur un dispositif (AZ) d'affichage pendant la procédure des automates finis coopérant de manière asynchrone.

14. Système selon l'une des revendications 8 à 13,
**Caractérisé en ce que**
Les états de défauts peuvent être accentués visuellement.

15. Programme informatique, qui implémente un procédé selon l'une des revendications 1 à 7.

16. Support de données, sur lequel un programme informatique est mémorisé selon la revendication 15.

17. Dispositif (PIW1) de traitement de données sur lequel un programme informatique est installé selon la revendication 15.
